# EUROPÄISCHE PATENTSCHRIFT

(11) **EP 0 491 906 B1**
(45) Veröffentlichungstag und Bekanntmachung des Hinweises auf die Patenterteilung: **23.10.1996**
(21) Anmeldenummer: 91912373.7
(22) Anmeldetag: 12.07.1991
(51) Int. Cl.: H01B 3/42, C08L 67/06

(54) **VERFAHREN ZUR HERSTELLUNG VON FLEXIBLEN SCHUTZ-, HILFS- UND ISOLIERMATERIALIEN AUF FASERBASIS, FÜR ELEKTRISCHE ZWECKE UNTER VERWENDUNG VON DURCH ENERGIEREICHE STRAHLUNG HÄRTBAREN IMPRÄGNIERMASSEN**
PROCESS FOR PRODUCING FLEXIBLE, FIBRE-BASED, PROTECTIVE, AUXILIARY AND INSULATING MATERIALS FOR ELECTRICAL PURPOSES USING IMPREGNATING MATERIALS CURABLE BY HIGH-ENERGY RADIATION
PROCEDE POUR FABRIQUER, AU MOYEN DE MATIERES D'IMPREGNATION DURCISSABLES PAR EXPOSITION A DES RAYONNEMENTS A HAUTE ENERGIE, DES MATERIAUX A BASE DE FIBRES, FLEXIBLES, PROTECTEURS, AUXILIAIRES ET ISOLANTS, DESTINES A ETRE UTILISES EN ELECTRICITE

(30) Priorität: 12.07.1990 DE 4022234
(43) Veröffentlichungstag der Anmeldung: 01.07.1992
(73) Patentinhaber: Herberts Gesellschaft mit beschränkter Haftung, 42285 Wuppertal (DE)
(72) Erfinder: BASTIAN, Udo, D-4030 Ratingen 1 (DE); KRAUSE, Rainer, D-5600 Wuppertal (DE); KIESSLING, Gerhard, D-4320 Hattingen (DE)
(74) Vertreter: Hrabal, Ulrich, Dr.
(86) Internationale Anmeldenummer: EP9101303
(87) Internationale Veröffentlichungsnummer: WO9201300

(56) Entgegenhaltungen:
- EP-A- 0 186 165
- DE-A- 3 146 124
- GB-A- 2 048 910
- US-A- 3 875 094

## Beschreibung

Die Erfindung betrifft ein Verfahren zur Herstellung von flexiblen imprägnierten Schutz- und Isoliermaterialien auf Faserbasis für elektrische Zwecke durch Aufbringen eines Imprägniermittels auf das zu imprägnierende Material und anschließende Härtung.

In der Elektrotechnik werden verschiedene Fasermaterialien, wie Umwicklungen, Gespinste, Geflechte und Gewebe, beispielsweise aus Glasseide, Baumwolle oder Kunststoffen, wie Polyester, zu Isolierzwecken eingesetzt. Hierzu werden beispielsweise Gewebeschläuche unterschiedlicher Durchmesser erstellt, durch die anschließend elektrische oder optische Leiter geführt werden können, oder werden Litzen direkt mit Geweben umhüllt unter Bildung sogenannter Gewebelitzen. Zu Isolierzwecken und zur Abschirmung gegen Einflüsse durch Feuchtigkeit und Chemikalien, werden derartige Gewebe an der Außenseite mit Überzugsmitteln überzogen und anschließend gehärtet. Beispielsweise erfolgt in der Praxis eine Imprägnierung mit lösemittelhaltigen Lacken auf Polyurethanbasis. Bei der thermischen Aushärtung derartiger Imprägnierungsmassen treten Emissionen auf, die einerseits zu Umwelt-Problemen, zu Geruchsbelästigung und Toxizitätsproblemen führen, andererseits aber auch Materialverluste bedingen.

Gemäß der DE-A-27 06 639 werden Prepregs aus faserförmigen Materialien und flüssigen Epoxidharzen hergestellt, die den Einsatz niedermolekularer toxischer Epoxide erfordern und starr und thermisch wenig stabil sind. In der EP-A-0 023 634 werden starre Formkörper beschrieben, die durch thermische Vorhärtung und Aushärtung mit UV-Strahlung von Polyesterharzen zwischen zwei Folien hergestellt werden. Bei der thermischen Vorhärtung treten unerwünschte Emissionen auf. In der AT-PS 309 087 werden Prepregs aus mit lösemittelhaltigen Systemen vor imprägnierten Glasfasererzeugnissen hergestellt, die nach der Formgebung zu starren Materialien gehärtet werden. Hier besteht die Gefahr von Lösemittelemissionen.

Die EP-A-O 186 165 offenbart die Herstellung von Leiterplatten, beispielsweise für gedruckte Schaltungen, und von mehrschichtigen imprägnierten und gehärteten Laminaten unter Verwendung einer lösemittelfreien, aus hartem ungesättigtem Polyester, weichem ungesättigtem Polyester, Styrol und Peroxiden bestehenden Harzzusammensetzung. Die erhaltenen Produkte sind im wesentlichen starr und weisen nur eine geringe Flexibilität auf. Die Schlagfestigkeit oder Schlagzähfestigkeit der Produkte soll verbessert werden.

Aufgabe der Erfindung war die Bereitstellung eines Verfahrens zur Herstellung flexibler imprägnierter Schutz-, Hilfs- und Isoliermaterialien auf Faserbasis für elektrische Zwecke, wie Leiter durch Auftrag eines überzugs und anschließende Härtung, unter Vermeidung von Emissionen. Diese Aufgabe wird gelöst durch ein Verfahren der eingangs genannten Art, das dadurch gekennzeichnet ist, daß man auf das zu imprägnierende schlauch- oder litzenartige Material eine lösemittelfreie Imprägniermasse, die einen oder mehrere olefinisch ungesättigte, radikalisch polymerisierbare Polyester, einen oder mehrere Weichmacher und gegebenenfalls einen oder mehrere thermisch ansprechende, peroxidfreie Radikalinitiatoren enthält, aufbringt, und anschließend eine Härtung mit energiereicher Strahlung vornimmt und gegebenenfalls weiter durch Erwärmen aushärtet. Als energiereiche Strahlung können vorteilhaft UV-Strahlung oder Elektronenstrahlung eingesetzt werden.

Die Imprägniermasse kann einen oder mehrere peroxidfreie Radikalinitiatoren enthalten. Soll eine Härtung durch energiereiche Strahlung, wie beispielsweise UV-Strahlung, erfolgen, so ist es zweckmäßig der Imprägniermasse einen entsprechenden Photoinitiator zuzusetzen. Derartige Photoinitiatoren erübrigen sich, wenn beispielsweise mit Elektronenstrahlung gehärtet wird, jedoch können auch in diesem Falle Photoinitiatoren angewendet werden.

Soll eine Nachhärtung durch Erwärmen nach erfolgter Anhärtung mit energiereicher Strahlung erfolgen, so ist es zweckmäßig, Radikalinitiatoren zuzusetzen, die auf Wärme ansprechen.

Das erfindungsgemäße Verfahren wird lösemittelfrei unter Verwendung von einem oder mehreren olefinisch ungesättigten, radikalisch polymerisierbaren Polyestern als Bindemittel durchgeführt. Als derartige Polyester können olefinisch ungesättigte Polyesterharze verwendet werden, die auf dem Gebiet von überzugsmitteln geläufig sind. Sie können auch Imid-Gruppen enthalten.

Beispielsweise werden solche Polyesterharze in der EP-A-0 134 513 beschrieben. Diese ungesättigten Polyester sind beispielsweise Kondensationsprodukte aus mehrwertigen ungesättigten Carbonsäuren, mehrwertigen Alkoholen und - wenn sie Imid-haltig sind - Aminogruppen enthaltenden Verbindungen, gegebenenfalls mit einem Anteil an monofunktionellen Verbindungen. Beispiele für mehrwertige Carbonsäuren sind Dicarbonsäuren, wie Malein- oder Fumarsäure, Citraconsäure, Itakonsäure, gegebenenfalls im Gemisch mit gesättigten oder aromatischen Carbonsäuren, wie Bernstein- oder Adipinsäure, Phthalsäure, Isophthalsäure, Terephthalsäure u.dgl., sowie Tetrahydrophthalsäure, Endomethylentetrahydrophthalsäure, bzw. die entsprechenden Teil- oder vollhalogenierten Verbindungen (mit flammhemmenden Eigenschaften). Die Säuren können in Form ihrer Derivate, wie Estern, Halbestern oder Anhydriden eingesetzt werden.

Beispiele für Verbindungen mit unterschiedlichen funktionellen Gruppen, die ebenfalls verwendet werden können, sind Zitronensäure, Monoethanolamin, Aminoethancarbonsäure, sowie die entsprechenden drei oder vier CH₂-Gruppen enthaltenden Aminoalkohole oder Aminocarbonsäuren.

Beispiele für mehrwertige ALkohole zur Herstellung der Polyester sind grundsätzlich die nach dem Stand der Technik zur Herstellung von Polyestern verwendeten Verbindungen. Geeignete Diole sind beispielsweise Glykol, Neopentylglykol, Propylenglykol. Polyole mit 3 oder 4 Hydroxylgruppen sind beispielsweise Glycerin, Trimethylolpropan, Trimethylolethan, Pentaerythrit, Dipentaerythrit und Tris-ethylisocyanat.

Es ist besonders günstig, wenn die ungesättigten Polyester sogenannte Imid-haltige ungesättigte Polyester sind, wie sie beispielsweise in DE-A-15 70 273, 17 70 386 und 28 56 050, sowie auch in EP-A-0 134 513 beschrieben werden. Derartige Imid-haltige ungesättigte Polvester können beispielsweise durch Einkondensieren von Polycarbonsäuren, die zur Anhydridbildung und Imidbildung befähigte Aminogruppen aufweisen und mit Aminogruppen einen Imidring bilden, hergestellt werden. Beispielsweise können bei der Herstellung der vorstehenden ungesättigten Polyester Tetrahydrophthalsäure bzw. deren Anhydrid, die mit Aminogruppen einen 5-gliedrigen Amidring bilden, mit einkondensiert werden. Die Imid-haltigen olefinisch ungesättigten Polyester können beispielsweise hergestellt werden nach der DE-A-28 56 050, durch Umsetzung von Imidgruppen enthaltenden Verbindungen der allgemeinen Formel 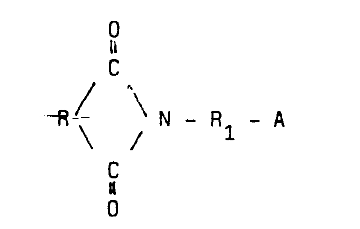 worin R für einen aromatischen, cycloaliphatischen und/oder aliphatischen Rest, an dem die beiden zur Anhydridbildung befähigten Carboxylreste in 1,2- oder 1,3-Stellung stehen, R₁ eine einfache aliphatische Gruppe mit 1 bis 10 Kohlenstoffatomen darstellt und A eine Hydroxy- oder Carboxylgruppe bedeutet, mit ungesättigten und gegebenenfalls zusätzlich gesättigten mehrwertigen Carbonsäuren oder deren Anhydriden und Hydroxylgruppen enthaltenden Verbindungen hergestellt werden. Als olefinisch ungesättigte und gesättigte mehrwertige Carbonsäuren sowie hydroxylgruppenhaltige Verbindungen können beispielsweise solche verwendet werden, wie sie vorstehend für die Herstellung der ungesättigten Polyester genannt wurden.

Allgemein können die ungesättigten Polyester wie die Imid-haltigen ungesättigten Polyester auch gesättigte und ungesättigte Öle, z.B. hydroxyfunktionelle Öle, wie Ricinusöl oder carboxyfunktionelle Öle, wie Maleinatöle, enthalten. Bei den Imid-gruppenhaltigen Verbindungen können z. B. bei deren Herstellung ungesättigte öle in einer Menge von 5 bis 50 Gew.%, bezogen auf das Gesamtgewicht des Polyesters, eingesetzt werden.

Die ungesättigten radikalisch polymerisierbaren Polyester können als Reaktivverdünner olefinisch ungesättigte, radikalisch polymerisierbare Monomere enthalten.

Als olefinisch ungesättigte Monomere kommen solche infrage, die dem Fachmann als radikalisch photopolymerisierbar geläufig sind; sie können eine oder mehrere olefinische Doppelbindungen sowie weitere funktionelle Gruppen enthalten. Besonders geeignet sind Acrylsäure- und Methacrylsäureester sowie Verbindungen mit einer oder mehreren vinylischen oder allylischen Doppelbindung. Beispiele für monofunktionelle Monomere sind Butyl(meth)acrylat, Hydroxyethyl(meth)acrylat, Hydroxypropyl(meth)acrylat und Butandiolmono(meth)acrylat. Beispiele für difunktionelle Monomere sind Butandioldi(meth)acrylat, Hexandioldi(meth)acrylat und Dipropylenglykoldi(meth)acrylat. Beispiele für tri- und tetrafunktionelle Monomere sind Trimethylolpropantri(meth)acrylat und Pentaerythrit-tri- oder -tetra(meth)acrylat. Der hier verwendete Ausdruck (Meth)acrylat bedeutet Acrylate und/oder Methacrylate.

Beispiele für vinylisch ungesättigte Monomere sind Styrol und Styrolderivate, wie Divinylbenzol, p-Methylstyrol und Vinyltoluol. Beispiele für Allylverbindungen sind Diallylphthalat und Pentaerythrit- tri- oder tetraallylether.

Den erfindungsgemäß verwendeten Imprägniermassen können peroxidfreie Radikalinitiatoren, wie Photoinitiatoren und thermisch ansprechende Initiatoren zugesetzt werden. Photoinitiatoren können bei Verwendung von energiereicher Strahlung zugesetzt werden, insbesondere bei Verwendung von UV-Strahlung.

Als Photoinitiatoren können solche dienen, wie sie auf dem Gebiet der durch energiereiche Strahlen härtbaren Zusammensetzungen üblich sind. Als Photoinitiatoren können beispielsweise solche übliche Initiatoren eingesetzt werden, die im Wellenlängenbereich von 190 bis 400 nm absorbieren. Beispiele für derartige Photoinitiatoren sind chlorhaltige Initiatoren, wie chlorhaltige aromatische Verbindungen, z.B. beschrieben in US-A-4 089 815; aromatische Ketone, wie in US-A-4 318 791 oder EP-A-0 003 002 und EP-A-0 161 463 beschrieben; Hydroxyalkylphenone, wie in US-A-4 347 111 beschrieben; Phosphinoxide, wie in EP-A-0 007 086, 0 007 508 und 0 304 783 beschrieben; wasserlösliche Initiatoren, beispielsweise auf der Basis von Hydroxyalkylphenonen, wie in US-A-4 602 097 beschrieben, ungesättigte Initiatoren, wie OH-funktionelle aromatische Verbindungen, die beispielsweise mit Acrylsäure verestert wurden, wie in US-A-3 929 490, EP-A-0 143 201 und EP-A-0 341 560 beschrieben; oder Kombinationen von derartigen Initiatoren, wie beispielsweise in US-A-4 017 652 beschrieben. Bevorzugte Beispiele sind 2-Methoxy-2-hydroxypropiophenon, Benzophenon, Thioxantonderivate, Acylphosphinoxide und Michlers Keton.

Die vorstehend genannten Photoinitiatoren können allein oder im Gemisch eingesetzt werden; beispielsweise sind Kombinationen von Phosphinoxiden mit weiteren üblichen Photoinitiatoren bevorzugt.

Werden die erfindungsgemäß eingesetzten Imprägniermassen einer teilweisen oder vollständigen Härtung durch Erwärmen unterzogen, so ist es günstig, auf Wärme ansprechende Initiatoren zuzusetzen. Diese können gegebenenfalls zusammen mit Photoinitiatoren eingesetzt werden.

Beispiele für auf Wärme ansprechende Initiatoren sind C-C-labile Verbindungen, wie sie etwa in der DE-PS-12 19224 beschrieben werden; es handelt sich um 1,2-substituierte Ethane der allgemeinen Formel 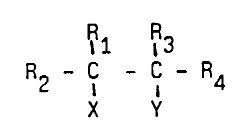 worin R₁ und R₃ aromatische Reste, R₂ ein Wasserstoffatom oder einen aliphatischen oder aromatischen Rest, R₄ einen aliphatischen oder aromatischen Rest und X und Y eine gegebenenfalls blockierte Hydroxylgruppe und/oder Halogen bedeuten.

Weitere Beispiele für 1,2-substituierte Ethane, die als Initiatoren für die radikalische Polymerisation unter Wärmezufuhr geeignet sind, sind solche der allgemeinen Formel 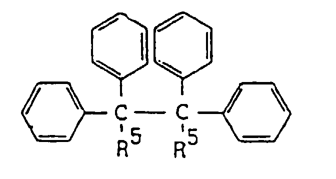 worin R⁵ = OH, -OCH₃, -OC₆H₅, -CH₃, -CN, -NH₂, -Cl, -OSi(CH₃)₃ bedeuten, wie beispielsweise von A. Bletzki und W. Krolikowski in Kunststoffe 70 (1980) 9, Seiten 558 - 562 beschrieben.

Weitere Beispiele für thermisch aktivierbare Radikalinitiatoren auf der Basis von 1,2-substituierten Ethanen sind solche der allgemeinen Formel 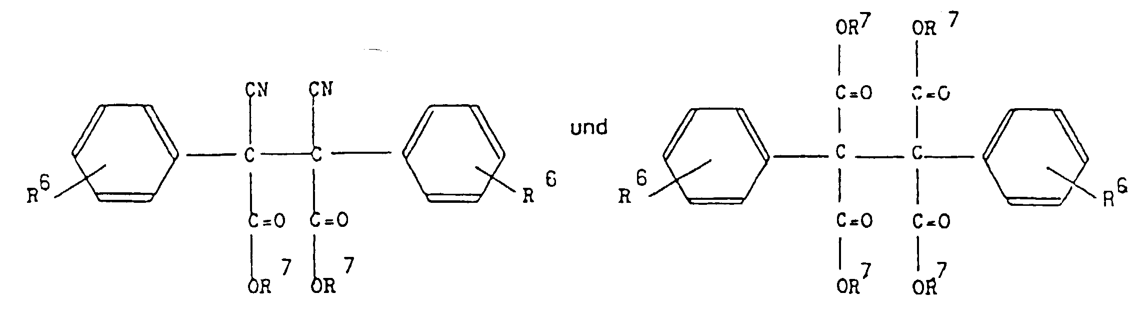 worin die Reste R⁶ unabhängig voneinander Wasserstoff, oder eine oder mehrere Alkyl- oder Alkoxygruppen, wie Methyl- oder Methoxygruppen darstellen können; und worin die Gruppen R⁷ unabhängig voneinander Wasserstoffatome odr Alkylgruppen, beispielsweise mit 1 - 4 Kohlenstoffatomen, wie Methylgruppen oder Ethylgruppen, darstellen. Derartige Verbindungen werden beispielsweise von H. Wolfers in Kunststoffe 68 (1978) 9, Seiten 553 - 555 und von D. Braun in Kunststoffe 69 (1979) 2, Seiten 100 - 104 beschrieben; es handelt sich um handelsübliche Initiatoren. Eine weitere Gruppe von thermisch aktivierbaren Radikalinitiatoren sind bifunktionelle Initiatoren vom Typ der cyclischen Silyl-Pinakol-Ether, wie beispielsweise in Polym. Bull. 16, 95 (1986) beschrieben.

Wie schon für die Photoinitiatoren beschrieben, können auch die thermisch aktivierbaren Initiatoren als Gemische eingesetzt werden.

Die erfindungsgemäß eingesetzten als Bindemittel dienenden ungesättigten Polyester enthalten einen oder mehrere Weichmacher.

Als Weichmacher können z.B. übliche Weichmacher für Kunststoffe verwendet werden, wie sie im Handel erhältlich sind. Geeignet sind jedoch auch elastische Polyester, die radikalisch nichtpolymerisierbar sind. Infrage kommen auch radikalisch polymerisierbare, olefinisch ungesättigte Polyester die eine höhere Elastizität aufweisen (die elastifiziert sind), als die als Bindemittel verwendeten ungesättigten Polyester.

Als übliche Weichmacher für Kunststoffe sind handelsübliche Weichmacher geeignet, z.B. Phthalate, wie Diisodecylphthalat; Phosphate, wie Triphenylphosphat; Fettsäureester, wie Butyloleat oder Butylstearat; und polymere Weichmacher, wie elastische Polyester, zum Beispiel auf der Basis von Adipinsäure oder Debatinsäure mit Polyolen, wie Diolen. Es können auch radikalisch einpolymerisierbare Weichmacher eingesetzt werden, wie Diallylphthalat oder Umesterungsprodukte von Alkylphenoletheralkoholen, wie Nonyllphenol-polyethylenglykol-Derivaten, mit ungesättigten Carbonsäuren, wie (Meth)acrylsäure oder deren Derivaten.

Als Weichmacher auf der Basis von olefinisch ungesättigten radikalisch polymerisierbaren elastifizierten Polyestern kommen zum Beispiel solche infrage, wie sie für die als Bindemittel eingesetzten Polyester definiert wurden. Elastifiziert bedeutet jedoch, daß die Weichmacher höhere Molekulargewichte aufweisen als die als Bindemittel eingesetzten Polyester. Das Molekulargewicht der als Bindemittel eingesetzten Polyester liegt bevorzugt bei einem Zahlenmittel (Mn) von 1000 bis 3000, besonders bevorzugt bei 1200 bis 2500.

Das Zahlenmittel des Molekulargewichts (Mn) der als Weichmacher eingesetzten ungesättigten Polyester liegt um 500 bis 6000, besonders bevorzugt um 1500 bis 6000 höher, als das der als Bindemittel eingesetzten Polyester. Die Zahlenmittel der Molekulargewichte (Mn) der als Weichmacher eingesetzten ungesättigten Polyester liegen bevorzugt bei 1500 bis 10000, besonders bevorzugt bei 3000 bis 60000.

Die unterschiedlichen Molekulargewichte von als Bindemittet dienenden Polyestern und als Weichmacher dienenden Polyestern können durch Wahl der entsprechenden Ausgangsmonomeren mit unterschiedlich hohen Molekulargewichten gesteuert werden, wie zum Beispiel der Polyole und der Polycarbonsäuren.

Bevorzugte Beispiele für die als Weichmacher eingesetzten ungesättigten Polyester sind Imid-haltige, wie sie vorstehend für die als Bindemittel verwendeten Polyester als Beispiele angegeben wurden.

Die als Weichmacher dienenden ungesättigten Polyester können auch in die als Bindemittel dienenden ungesättigten Polyester einkondensiert sein. Hierzu können z.B. die Ausgangsmonomeren beider Polyester miteinander zur Umsetzung gebracht werden. Dies kann z.B. durch Einsatz unterschiedlicher Polyole und/oder Polycarbonsäuren erfolgen.

Die üblichen Weichmacher werden z.B. in Mengen von 1 bis 20 Gew.-% bezogen auf das gesamte Imprägniermittel eingesetzt. Die als Weichmacher dienenden ungesättigten Polyester werden bevorzugt (auch in der einkondensierten Weise) in einer Menge von 1 bis 50 Gew.-%, bezogen auf die Summe von als Bindemittel dienendem Polyester und als Weichmacher dienendem Polyester eingesetzt.

Die erfindungsgemäßen Imprägniermittel können neben den als Bindemittel dienenden ungesättigten Polyestern auch andere radikalisch polymerisierbare Bindemittel in einer Menge bis zu 50 Gew.-% des als Bindemittel verwendeten Polyesters enthalten. Beispiele für radikalisch polymerisierbare Bindemittel sind Oligomere, Prepolymere oder Polymere mit ungesättigten Doppelbindungen, wie (meth)acrylfunktionelle (Meth)acrylpolymere, Epoxidharz-(meth)acrylate, z.B. Umsetzungsprodukte aus 2 Mol (Meth)acrylsäure und handelsüblichen Epoxidharzen, wie z.B. Epicote® 828, Polyester(meth)acrylate, Polyether(meth)acrylate, Urethan(meth)acrylate, Amin(meth)acrylate, ungesättigte Polyurethane, Silicon(meth)acrylate und Kombinationen davon. Beispiele für derartige härtbare Produkte sind in den folgenden Literaturstellen beschrieben: Epoxy(meth)acrylate in EP-A-0 033 896, EP-A-0 049 922 und US-A-4 485 123; Urethan(meth)acrylate in EP-A-0 053 749, EP-A-0 209 684 und US-A-4 162 274; Polyester(meth)acrylate in EP-A-0 083 666, DE-A-38 10 140, DE-A-38 20 294.

Zur Herstellung der erfindungsgemäß verwendeten radikalisch polymerisierbaren Massen werden die vorstehend genannten Bestandteile mit den Radikalinitiatoren vermischt. Zusätzlich können den radikalisch polymerisierbaren Massen übliche Zusatzstoffe zugefügt werden, wie Pigmente,Streckmittel, Beschleuniger (z. B. Metallsalze), Stabilisatoren (z.B. Hydrochinon, Benzochinon), wie sie dem Fachmann auf diesem Gebiet geläufig sind.

Die erfindungsgemäß zu imprägnierenden Materialien werden mit der einzusetzenden Imprägniermasse imprägniert. Dies kann durch Aufstreichen von außen, durch Aufsprühen oder Tränken geschehen. Werden beispielsweise schlauchartige Materialien oder litzenartige Materialien imprägniert, so können diese etwa durch ein Imprägnierbad geführt werden, so daß sie von ihrer Außenseite her imprägniert werden.

Anschließend an den Imprägniervorgang erfolgt eine Härtunq der radikalisch polymerisierbaren Masse zumindest an der Oberfläche des imprägnierten Substrats beispielsweise mittels einer Strahlenquelle, die energiereiche Strahlung emittiert, z.B. einer Strahlenquelle für UV-Licht oder einer Strahlenquelle für Elektronenstrahlung. Als Strahlungsquellen können übliche für die UV- bzw. Elektronenstrahlung geeignete Quellen eingesetzt werden. Als Strahlenquelle für UV-Strahlung sind beispielsweise Quecksilber-Hochdruckstrahler und Quecksilber-Mitteldruckstrahler geeignet.

Das imprägnierte Gewebe wird zur Strahlungshärtung an der Oberfläche der Strahlungsquelle vorbeigeführt. Das Verfahren kann auf diese Weise kontinuierlich durchgeführt werden.

Anschließend kann noch durch Wärmeenergie ausgehärtet werden. Die Härtung durch Wärmeenergie kann mittels üblicher Härtungseinrichtungen durchgeführt werden, beispielsweise einem beheizten Ofen oder durch IR-Strahlung. Die verwendbaren Temperaturen liegen beispielsweise im Bereich von etwa 80 bis 180°C bei Reaktionszeiten, die je nach dem zu härtenden System variieren, beispielsweise von 1 Minute bis zu 180 Minuten.

Im allgemeinen wird so gearbeitet, daß Imprägniermassen, die in der Wärme flüchtige Materialien enthalten, möglichst vollständig einer Härtung durch energiereiche Strahlung unterworfen werden. Dies gilt insbesondere für Materialien, die niedermolekulare flüchtige Monomere enthalten, wie beispielsweise Styrol, Divinylstyrol oder Vinyltoluol.

Die Substrate, die erfindungsgemäß imprägniert werden können, sind solche auf Faserbasis; die für elektrische Zwecke oder optische Leiter eingesetzt werden, beispielsweise auf der Basis von Glasfasern, Baumwollfasern und Kunststoffasern, wie Polyesterfasern. Diese Fasermaterialien können in verschiedenen Formen vorliegen, beispielsweise als Gewebe, Geflechte, geklöppelte Materialien, Gespinste oder Wickelungen. Ein Beispiel für ein Gewebe ist beispielsweise die sogenannte E-Glasseide. Derartige Gewebe werden häufig als Gewebeschläuche eingesetzt, in die ein elektrisch leitendes Material oder optisch leitendes Material, wie Glasfasern, eingezogen werden. Es sind jedoch auch Litzen möglich, die bereits einen elektrischen oder optischen Leiter enthalten, der mit dem Fasermaterial überzogen ist; dieses Fasermaterial kann ein Gewebe sein oder in Form eines Geflechts oder einer oder mehreren Wickelungen vorliegen. Der elektrische Leiter oder optische Leiter kann auch eine Zwischen-Schutzschicht aus beispielsweise Silikonkautschuk enthalten. Die Fasermaterialien können somit zum Schutz oder zur Isolierung von beispielsweise elektrischen oder optischen Leitern verwendet werden; sie können jedoch auch in Form von Seilen und Kordeln vorliegen, die beispielsweise die Zugfestigkeit in gebündelten Kabeln verbessern.

Die erfindungsgemäß erzielten Massen sind flexibel. Durch die erfindungsgemäße Verfahrensweise werden einwandfreie Imprägnierungen erzielt. Emissionen werden weitgehend vermieden. Hierdurch wird der Materialverbrauch bei gleicher Imprägnierqualität stark verringert, bzw. es ergibt sich eine verbesserte Imprägnierqualität bei gleichem Materialverbrauch. Das Verfahren läßt sich somit in wirtschaftlicher Weise durchführen. Durch das erfindungsgemäße Verfahren werden Lösemittelemissionen vermieden, die bei bekannten Verfahren bis zu 80 Gew.-% der Imprägniermasse betragen. Die Emission von Monomeren, die bei bekannten Verfahren bis zu 20 Gew.-% der Imprägniermittel betragen, sind bis auf maximal etwa 5 Gew.-% herabgesetzt.

### Beispiel 1:

Herstellung eines als Weichmacher einsetzbaren elastischen ungesättigten Polyester:

### Rezeptur:

- 30 Gew.-Teile (T): Triethylenglykol
- 35 T: Tetrahydrophthalsäureanhydrid
- 22 T: Trimellithsäureanhydrid
- 21 T: Ethanolamin

Die vorstehenden Bestandteile werden in einem Reaktionsgefäß unter Rühren und unter einem Inertgas 3 Stunden bei 126 bis 160°C zur Reaktion gebracht.

Dann werden 11 T Maleinsäureanhydrid und 25 T Adipinsäure zugesetzt, worauf 4 Stunden bei 160 bis 210°C zur Reaktion gebracht wird und das erhaltene Reaktionswasser kontinuierlich abgezogen wird.

Unter Zuhilfenahme von 6 T Xylol wird das restliche Wasser ausgekreist (ca. 7 Stunden bei 190 bis 200°C).

Nach Abdestillieren des Xylols im Vakuum bei 160°C werden 0,5 T Toluhydrochinon (Stablisator) und nach Abkühlen auf etwa 100°C 60 T Styrol (als Reaktivverdünner) zugesetzt. Man erhält eine klare Lösung mit einer Viskosität von 290 mPa.s (25°C).

### Beispiel 2:

Herstellung eines ungesättigten Polyesters, der als Bindemittel dient und den ungesättigten Polyester-Weichmacher einkondensiert enthält:

Es wird in gleicher Weise gearbeitet wie im vorstehenden Beispiel 1, wobei jedoch folgende Materialien eingesetzt werden:
- 17 T: Tetrahydrophthalsäureanhydrid
- 5 T: Trimellithsäureanhydrid
- 12 T: Triethylenglykol
- 8 T: Monoethanolamin
- 14 T: Maleinsäureanhydrid
- 6 T: Adipinsäure
- 3 T: Trimethylolpropan
- 6 T: Neopentylglykol
- 0,2 T: Toluhydrochinon (Stabilisator)
- 60 T: Styrol (Reaktivverdünner)

Man erhält wie im Beispiel 1 eine klare Lösung.

### Beispiel 3:

Herstellung eines Imprägniermasse:

Die styrolische Lösung eines Gemisches aus einem Isophthalsäurepolyester mit einem Imidpolyester (Herstellung gemäß EP-A-0 134 513) wird gemäß folgender Rezeptur mit einem ungesättigten Polyester als Weichmacher (gemäß Beispiel 1) und einem Photoinitiator gemäß folgender Rezeptur versetzt:
- 50 T: Imidpolyester
- 50 T: Isophthalsäurepolyester
- 100 T: des ungesättigten Polyesters nach Beispiel 1
- 80 T: Styrol
- 0,05 T: Hydrochinon (Stabilisator)
- 8 T: Photoinitiator: 1-Phenyl-1-hydroxypropiophenon.

Ein Glasgewebeschlauch mit einem Innendurchmesser von 8 mm wird mit einer Geschwindigkeit von 2 m/min. durch die vorstehende Imprägniermasse so geführt, daß er nur von außen benetzt wird. Zur Erzielung einer einheitlichen Schichtstärke wird die überschüssige Imprägniermasse mit einer entsprechend geformten Düse abgestreift. Der so beschichtete Gewebeschlauch wird mit der gleichen Geschwindigkeit an einer UV-Quelle vorbeigeführt (3 Quecksilbermitteldruckstrahler, Leistung 100 W/cm). Man erhält einen gleichmäßig beschichteten flexiblen imprägnierten Glasseidenschlauch.

### Beispiel 4:

Es wurde die gleiche Rezeptur und die gleiche Verfahrensweise wie im Beispiel 3 durchgeführt. Jedoch wurde die Rezeptur durch 7 T eines wärmeaktivierbaren Initiators, Phenylethanderivat nach DE-A-12 19 224, versetzt. Hierdurch konnte die Durchlaufgeschwindigkeit auf das Dreifache erhöht werden, wobei anschließend an die Strahlungshärtung in einem Härtungsofen bei einer Temperatur von 200°C nachgehärtet wurde.

### Beispiel 5:

Es wurde in gleicher Weise gearbeitet wie im Beispiel 4, wobei jedoch kein ungesättigter Polyester als Weichmacher verwendet wurde. Als Weichmacher wurden vielmehr 20 T eines handelsüblichen Weichmachers für Kunststoffe, nämlich Dimethylphthalat, eingesetzt. Man erhielt, wie im Beispiel 4, einen flexiblen gleichmäßig beschichteten Glasfaserschlauch.

### Beispiel 6:

### Rezeptur:

- 100 T: des ungesättigten Polyesters nach Beispiel 2
- 20 T: Trimethylolpropantriacrylat
- 0,05 T: Hydrochinon (Stabilisator)
- 2 T: Photoinitiator, wie im Beispiel 3,
- 2 T: wärmelabiler Initiator gemäß Beispiel 4.

Die aus der vorstehenden Rezeptur hergestellte Imprägniermasse wurde als Basis zur Imprägnierung eines Gewebeschlauchs, wie in den vorstehenden Beispielen beschrieben, verwendet. Auch hier erhielt man einen einwandfrei beschichteten flexiblen Gewebeschlauch.

## Patentansprüche

1. Verfahren zur Herstellung von flexiblen imprägnierten Schutz- und Isoliermaterialien auf Faserbasis für elektrische Zwecke durch Aufbringen eines Imprägniermittels auf das zu imprägnierende Material und anschließende Härtung, dadurch gekennzeichnet, daß man auf das zu imprägnierende schlauch- oder litzenartige Material eine lösemittelfreie Imprägniermasse, die einen oder mehrere olefinisch ungesättigte, radikalisch polymerisierbare Polyester, einen oder mehrere Weichmacher und gegebenenfalls einen oder mehrere thermisch ansprechende, peroxidfreie Radikalinitiatoren enthält, aufbringt und anschließend eine Härtung mit energiereicher Strahlung vornimmt und gegebenenfalls weiter durch Erwärmen aushärtet.

2. Verfahren nach Anspruch 1, dadurch gekennzeichnet, daß man als olefinisch ungesättigten Polyester einen Imid-haltigen olefinisch ungesättigten Polyester verwendet.

3. Verfahren nach einem der Ansprüche 1 oder 2, dadurch gekennzeichnet, daß man eine Imprägniermasse verwendet, die als radikalisch polymerisierbare Monomere eine oder mehrere Phenylverbindungen und/oder (Meth)acrylverbindungen und/oder Allylverbindungen enthält.

4. Verfahren nach einem der vorhergehenden Ansprüche, dadurch gekennzeichnet, daß man als Radikalinitiatoren peroxidfreie Photoinitiatoren verwendet und mit energiereicher Strahlung härtet.

5. Verfahren nach einem der Ansprüche 1 bis 3, dadurch gekennzeichnet, daß man als Radikalinitiatoren solche verwendet, die thermisch ansprechen und die Härtung durch Erwärmen vornimmt.

6. Verfahren nach einem der Ansprüche 1 bis 3, dadurch gekennzeichnet, daß man Radikalinitiatoren verwendet, die sowohl auf energiereiche Strahlung als auch auf Wärmezufuhr ansprechen, oder die Gemische aus auf energiereiche Strahlung ansprechenden Radikalinitiatoren und auf Wärmezufuhr ansprechenden Radikalinitiatoren sind und daß man die Härtung durch energiereiche Strahlung und anschließendes Erwärmen vornimmt.

7. Verfahren nach Anspruch 1, **dadurch gekennzeichnet**, daß man auf das zu imprägnierende schlauch- oder litzenartige Material eine lösemittelfreie Imprägniermasse, die einen oder mehrere olefinisch ungesättigte, radikalisch polymerisierbare Polyester, ein oder mehrere radikalisch polymerisierbare Monomere als Reaktivverdünner, einen oder mehrere Weichmacher, sowie gegebenenfalls einen oder mehrere peroxidfreie Radikalinitiatoren enthält, aufbringt und anschließend eine Härtung mit energiereicher Strahlung, sowie gegebenenfalls eine weitere Härtung durch Erwärmen vornimmt.

8. Verfahren nach einem der Ansprüche 1 bis 7, dadurch gekennzeichnet, daß man mit einer Imprägniermasse arbeitet, die zusätzlich acrylisch und/oder methacrylisch ungesättigte, radikalisch polymerisierbare Polymere und/oder Oligomere in einer Menge bis zu 50 Gew.-%, bezogen auf den ungesättigten Polyester, enthält.

9. Verfahren nach einem der Ansprüche 1 bis 7, dadurch gekennzeichnet, daß als Weichmacher ein üblicher Weichmacher für Kunststoffe, ein elastischer Polyester und/oder ein elastifizierter, olefinisch ungesättigter, radikalisch polymerisierbarer Polyester verwendet wird.

10. Verfahren nach Anspruch 9, dadurch gekennzeichnet, daß als üblicher Weichmacher ein radikalisch polymerisierbarer Weichmacher verwendet wird.

11. Verfahren nach Anspruch 9, dadurch gekennzeichnet, daß man einen oder mehrere olefinisch ungesättigte, radikalisch polymerisierbare Polyester verwendet, in die der als Weichmacher dienende elastifizierte olefinisch ungesättigte radikalisch polymerisierbare Polyester bereits einkondensiert ist.

12. Verfahren nach einem der Ansprüche 9 und 11, dadurch gekennzeichnet, daß man als elastifizierten olefinisch ungesättigten Polyester einen Polyester verwendet, dessen Zahlenmittel des Molekulargewichts (Mn) um 500 bis 6000, bevorzugt um 1500 bis 6000 höher liegt als das, des als Bindemittel in der Imprägniermasse verwendeten Polyesters.

13. Verfahren nach einem der Ansprüche 1 bis 12, dadurch gekennzeichnet, daß als energiereiche Strahlung UV-Strahlung oder Elektronenstrahlung eingesetzt wird.

14. Verwendung von lösemittelfreien Massen auf einem oder mehreren olefinisch ungesättigten, radikalisch polymerisierbaren Polyestern, die ein oder mehrere radikalisch polymerisierbare Monomere als Reaktivverdünner, einen oder mehrere Weichmacher, sowie gegebenenfalls einen oder mehrere peroxidfreie Radikalinitiatoren enthalten, als Imprägniermittel zur Herstellung von mit Geweben umgebenen elektrischen Leitern.

15. Verwendung nach Anspruch 13, zur Herstellung von mit Geweben umgebenen elektrischen Leitern.

## Claims

1. Process for the production of flexible, fibre-based impregnated protective and insulating materials for electrical purposes by application of an impregnating agent onto the material to be impregnated and subsequent curing, characterised in that a solvent-free impregnating composition is applied onto the tubular or stranded material to be impregnated, which composition contains one or more olefinically unsaturated, free-radically polymerisable polyesters, one or more plasticisers and optionally one or more thermally activated, peroxide-free free radical initiators and curing is then performed with high energy radiation and further curing is optionally performed by heating.

2. Process according to claim 1, characterised in that the olefinically unsaturated polyester used is an olefinically unsaturated polyester containing imide.

3. Process according to one of claims 1 or 2, characterised in that an impregnating composition is used which contains one or more phenyl compounds and/or (meth)acrylic compounds and/or allyl compounds as the free-radically polymerisable monomers.

4. Process according to one of the preceding claims, characterised in that peroxide-free photoinitiators are used as the free radical initiators and curing is performed with high energy radiation.

5. Process according to one of claims 1 to 3, characterised in that the free radical initiators used are those which are activated thermally and curing is performed by heating.

6. Process according to one of claims 1 to 3, characterised in that free radical initiators are used which are activated both by high energy radiation and by heat, or which are mixtures of free radical initiators activated by high energy radiation and free radical initiators activated by heat and that curing is performed by high energy radiation and subsequent heating.

7. Process according to claim 1, characterised in that a solvent-free impregnating composition is applied onto the tubular or stranded material to be impregnated, which composition contains one or more olefinically unsaturated, free-radically polymerisable polyesters, one or more free-radically polymerisable monomers as reactive diluents, one or more plasticisers and optionally one or more peroxide-free free radical initiators and curing is then performed with high energy radiation and further curing is optionally performed by heating.

8. Process according to one of claims 1 to 7, characterised in that an impregnating composition is used which additionally contains acrylically and/or methacrylically unsaturated, free-radically polymerisable polymers and/or oligomers in a quantity of up to 50 wt.% relative to the unsaturated polyesters.

9. Process according to one of claims 1 to 7, characterised in that the plasticiser used is a conventional plasticiser for plastics, an elastic polyester and/or an elasticised, olefinically unsaturated, free-radically polymerisable polyester.

10. Process according to claim 9, characterised in that a free-radically polymerisable plasticiser is used as the conventional plasticiser.

11. Process according to claim 9, characterised in that one or more olefinically unsaturated, free-radically polymerisable polyesters are used, into which the elasticised, olefinically unsaturated, free-radically polymerisable polyester acting as plasticiser has already been co-condensed.

12. Process according to one of claims 9 and 11, characterised in that the elasticised olefinically unsaturated polyester used is a polyester having a number average molecular weight (Mn) approximately 500 to 6000, preferably 1500 to 6000 higher than that of the polyester used as the binder in the impregnating composition.

13. Process according to one of claims 1 to 12, characterised in that UV radiation or electron beams are used as the high energy radiation.

14. Use of solvent-free compositions based on one or more olefinically unsaturated, free-radically polymerisable polyesters, which contain one or more free-radically polymerisable monomers as reactive diluents, one or more plasticisers, optionally together with one or more peroxide-free free radical initiators, as an impregnating agent for the production of electrical conductors covered with woven fabrics.

15. Use according to claim 13 for the production of conductors covered with woven fabrics.

## Revendications

1. Procédé de fabrication de matériaux protecteurs et isolants imprégnés flexibles à base de fibres pour applications électriques par dépôt d'un agent d'imprégnation sur le matériau à imprégner puis durcissement, caractérisé en ce qu'on dépose sur le matériau de type tuyau ou maille à imprégner une matière d'imprégnation dépourvue de solvant qui contient un ou plusieurs polyesters oléfiniquement insaturés polymérisables par voie radicalaire, un ou plusieurs plastifiants et le cas échéant un ou plusieurs inducteurs de radicaux dépourvus de peroxyde thermiquement durcissables correspondants, puis en ce qu'on procède à un durcissement avec un rayonnement riche en énergie et le cas échéant en ce qu'on durcit encore par chauffage.

2. Procédé selon la revendication 1, caractérisé en ce qu'on utilise comme polyester oléfiniquement insaturé un polyester oléfiniquement insaturé contenant des fonctions imide.

3. Procédé selon l'une des revendications 1 ou 2, caractérisé en ce qu'on utilise une matière d'imprégnation qui contient comme monomères polymérisables par voie radicalaire un ou plusieurs composés phényliques et/ou composés (méth)acryliques et/ou composés allyliques.

4. Procédé selon l'une des revendications précédentes, caractérisé en ce qu'on utilise comme inducteurs radicalaires des photoinducteurs dépourvus de peroxyde et en ce qu'on durcit avec un rayonnement riche en énergie.

5. Procédé selon l'une des revendications 1 à 3, caractérisé en ce qu'on utilise comme inducteurs radicalaires des inducteurs qui sont thermiquement sensibles et en ce qu'on procède au durcissement par chauffage.

6. Procédé selon l'une des revendications 1 à 3, caracvtérisé en ce qu'on utilise des inducteurs radicalaires qui sont sensibles aussi bien à un rayonnement riche en énergie qu'à un apport de chaleur, ou qui sont des mélanges d'inducteurs radicalaires sensibles à un rayonnement riche en énergie et d'inducteurs radicalaires sensibles à un apport de chaleur, et en ce qu'on procède au durcissement par une irradiation riche en énergie puis par chauffage.

7. Procédé selon la revendication 1, caractérisé en ce qu'on dépose sur le matériau de type tuyau ou maille à imprégner une matière d'imprégnation dépourvue de solvant, qui contient un ou plusieurs polyesters oléfiniquement insaturés polymérisables par voie radicalaire, un ou plusieurs monomères polymérisables par voie radicalaire comme diluants de réactifs, un ou plusieurs plastifiants, ainsi que le cas échéant un ou plusieurs inducteurs radicalaires dépourvus de peroxyde, puis en ce qu'on procède à un durcissement avec un rayonnement riche en énergie, ainsi que le cas échéant à un autre durcissement par chauffage.

8. Procédé selon l'une des revendications 1 à 7, caractérisé en ce qu'on travaille avec une matière d'imprégnation qui contient en outre des polymères et/ou oligomères à insaturation acrylique et/ou méthacrylique, polymérisables par voie radicalaire, en une quantité allant jusqu'à 50% en poids, par rapport au polyester insaturé.

9. Procédé selon l'une des revendications 1 à 7, caractérisé en ce qu'on utilise comme plastifiant un plastifiant habituel pour matières synthétiques, un polyester élastique et/ou un polyester élastifié, à insaturation oléfinique, polymérisable par voie radicalaire.

10. Procédé selon la revendication 9, caractérisé en ce qu'on utilise comme plastifiant habituel un plastifiant polymérisable par voie radicalaire.

11. Procédé selon la revendication 9, caractérisé en ce qu'on utilise un ou plusieurs polyesters oléfiniquement insaturés polymérisables par voie radicalaire dans lesquels les polyesters élastifiés à insaturation oléfinique, polymérisables par voie radicalaire, servant de plastifiants, sont déjà intégrés dans la condensation.

12. Procédé selon l'une des revendications 9 et 11, caractérisé en ce qu'on utilise comme polyester oléfiniquement insaturé élastifié un polyester dont le poids moléculaire moyen en nombre (Mn) se situe à un niveau supérieur de 500 à 6000, de préférence de 1500 à 6000, à celui du polyester utilisé comme liant dans la matière d'imprégnation.

13. Procédé selon l'une des revendications 1 à 12, caractérisé en ce qu'on utilise comme rayonnement riche en énergie un rayonnement UV ou un rayonnement électronique.

14. Utilisation de matières dépourvues de solvant sur un ou plusieurs polyesters oléfiniquement insaturés, polymérisables par voie radicalaire,, qui contiennent un ou plusieurs monomères polymérisables par voie radicalaire comme diluants de réactifs, un ou plusieurs plastifiants, ainsi que le cas échéant un ou plusieurs inducteurs de radicaux dépourvus de peroxyde, comme agents d'imprégnation pour la fabrication de conducteurs électriques entourés de tissus.

15. Application selon la revendication 13 à la fabrication de conducteurs électriques entourés de tissus.
